# EUROPÄISCHE PATENTSCHRIFT

(11) **EP 1 028 862 B1**
(45) Veröffentlichungstag und Bekanntmachung des Hinweises auf die Patenterteilung: **06.08.2003**
(21) Anmeldenummer: 99936324.5
(22) Anmeldetag: 27.05.1999
(51) Int. Cl.: B60J 7/057, H02H 7/085

(54) **VERFAHREN ZUM ANSTEUERN EINES SCHIEBEDACHES**
METHOD FOR CONTROLLING A SUNROOF
PROCEDE DE COMMANDE D'UN TOIT OUVRANT

(30) Priorität: 18.06.1998 DE 19827110
(43) Veröffentlichungstag der Anmeldung: 23.08.2000
(73) Patentinhaber: ROBERT BOSCH GMBH, 70442 Stuttgart (DE)
(72) Erfinder: LAMM, Hubert, D-77876 Kappelrodeck (DE); HADERER, Guenter, D-77815 Bühl (DE)
(86) Internationale Anmeldenummer: DE9901552
(87) Internationale Veröffentlichungsnummer: WO99065717

(56) Entgegenhaltungen:
- DE-C- 19 615 123
- PATENT ABSTRACTS OF JAPAN vol. 009, no. 055 (M-362), 9. März 1985 (1985-03-09) & JP 59 190020 A (AISHIN SEIKI KK), 27. Oktober 1984 (1984-10-27)
- PATENT ABSTRACTS OF JAPAN vol. 1998, no. 06, 30. April 1998 (1998-04-30) & JP 10 054175 A (TOKAI RIKA CO LTD), 24. Februar 1998 (1998-02-24)

## Beschreibung

### Stand der Technik

die Erfindung geht aus von einem Verfahren zum Ansteuern eines Schiebedaches nach dem Oberbegriff des Hauptanspruches 1.

In der JP 59 190020 A wird ein Einklemmschutzsystem eines Schiebedachs beschrieben, bei dem einer Auswerteeinheit des Einklemmschutzsystems ein Signal eines Beschleunigungssensors zugeführt wird. Die Beschleunigung oder Verzögerung wird mit einem vorgegebenen Schwellwert verglichen und bei dessen Überschreiten die Einklemmschutzfunktion des Schiebedachantriebs abgeschaltet.

Aus der DE PS 196 15 123 ist ferner ein Verfahren zur elektronischen Überwachung eines in einem Fahrzeug angeordneten Verstellantriebs, insbesondere Schiebedachantriebs, bekannt, bei dem ein durch eine Sensorik erfaßte Meßgröße beim Schließen des Daches mit einem Schwellwert für die Schließkraftbegrenzung zwecks Gewährleistung eines Einklemmschutzes verglichen wird und bei Erreichen des Schwellwertes der Antriebsmotor ausgeschaltet und/oder reversiert wird. Das Erreichen des Schwellwerts stellt somit ein Einklemmkriterium dar und führt zu einem Freigeben des zwischen dem Verstellteil und einem Anschlag des Verstellteils eingeklemmten Gegenstandes, z.B. ein Arm oder Hals.

Darüber hinaus wird der Schwellwert den geschwindigkeitsabhängigen Kraft- und Druckverhältnissen am Verstellteil bzw. Schiebedachdeckel angepaßt, indem die Fahrzeuggeschwindigkeit mittels eines dem Verstellantrieb zugeführtem Tachosignals ausgewertet wird. So wird ein unerwünschtes Auslösen der Schließkraftbegrenzung bzw. des Einklemmschutzes aufgrund der bei hohen Geschwindigkeiten auftretenden Kräfte am Verstellteil, ohne daß eine Einklemmsituation vorliegt, verhindert. Damit sind folglich Schwellwerte in Abhängigkeit von einer Geschwindigkeit einstellbar.

Eine Beschleunigung des Fahrzeugs, beispielsweise eine Vollbremsung, wird hierbei jedoch nicht erkannt. Dabei erfolgt der Schließvorgang eines Schiebedaches in negativ beschleunigten Systemen leichtgängiger als in unbeschleunigten Systemen. Dies führt zu der Problematik, daß die durch eine negative Fahrzeugbeschleunigung beim Schließvorgang eines Schiebedaches hervorgerufene positive Beschleunigung des Schiebedachdeckels in Schließrichtung und folglich auch die damit verbundene Drehzahlerhöhung des Antriebsmotors nicht erkannt wird. Ein anschließendes Reduzieren der Beschleunigung, insbesondere durch das Anhalten des Fahrzeugs, führt zu einer Reduzierung der Drehzahl des Schiebedachmotors. Diese Drehzahlreduzierung wird als Einklemmkriterium gewertet, so daß der Einklemmschutz anspricht und das Schiebedach unerwünscht angehalten und/oder reversiert wird.

### Vorteile der Erfindung

Das erfindungsgemäße Verfahren mit den kennzeichnenden Merkmalen des Hauptanspruches hat den Vorteil, daß eine Fahrzeugbremsung durch eine Steuerung der Schiebedachvorrichtung erkannt wird, und der Einklemmschutz bzw. die Schließkraftbegrenzung korrigiert wird, so daß ein Fehlreversieren des Schiebedaches bei einem abbremsenden und insbesondere anhaltenden Fahrzeug während des Schließens des Daches unterbunden wird.

Durch die in den Unteransprüchen aufgeführten Merkmale ergeben sich vorteilhafte Weiterbildungen und Verbesserungen der im Hauptanspruch angegebenen Merkmale. Besonders vorteilhaft ist, daß die Steuerung aus den Eingangssignalen wenigstens einen Beschleunigungswert des Fahrzeugs ermittelt, der mit einem Grenzwert verglichen wird. Das Erreichen des Grenzwertes wird als Fahrzeugvollbremsung interpretiert und führt zu einer Korrektur des Einklemmschutzes. Diese Korrektur des Einklemmschutzes wird nach erfolgter Bremsung durch die Steuerung rückgängig gemacht.

Verbessert wird das Verfahren indem nicht lediglich ein Beschleunigungswert herangezogen wird, sondern mehrere, vorzugsweise zwei Beschleunigungswerte, die mit jeweils einem vorgegebenen Grenzwert verglichenen werden. Bei Erreichen beider Grenzwerte wird wiederum auf eine Fahrzeugvollbremsung geschlossen und der Einklemmschutz korrigiert.

Vorzugsweise werden die Beschleunigungswerte aus einem Geschwindigkeitssignal, insbesondere einem Tachosignal, gewonnen, das der Steuerung zugeführt wird. Die Tachosignale werden dazu sukzessiv in einem Ringspeicher zwischengespeichert. Durch Differenzbildung in einer Auswerteelektronik werden die Beschleunigungswerte ermittelt.

Beruht die Ermittlung einer Einklemmsituation beispielsweise auf einer Drehzahlerfassung der Motorankerwelle und einem Vergleich der Drehzahl mit einem Schwellwert für die Schließkraftbegrenzung, so wird hierbei eine Korrektur des Einklemmschutzes vorgenommen, indem der Schwellwert korrigiert, vorzugsweise angehoben wird.

### Zeichnung

Ausführungsbeispiele der Erfindung sind in der Zeichnung dargestellt und in der nachfolgenden Beschreibung näher erläutert. Es zeigen
Fig. 1 ein Blockschaltbild der Vorrichtung zur Ansteuerung eines Schiebedaches und
Fig. 2 ein Ablaufdiagramm zu dem erfindungsgemäßen Verfahren zum Ansteuern eines Schiebehebedaches.

### Beschreibung der Ausführungsbeispiele

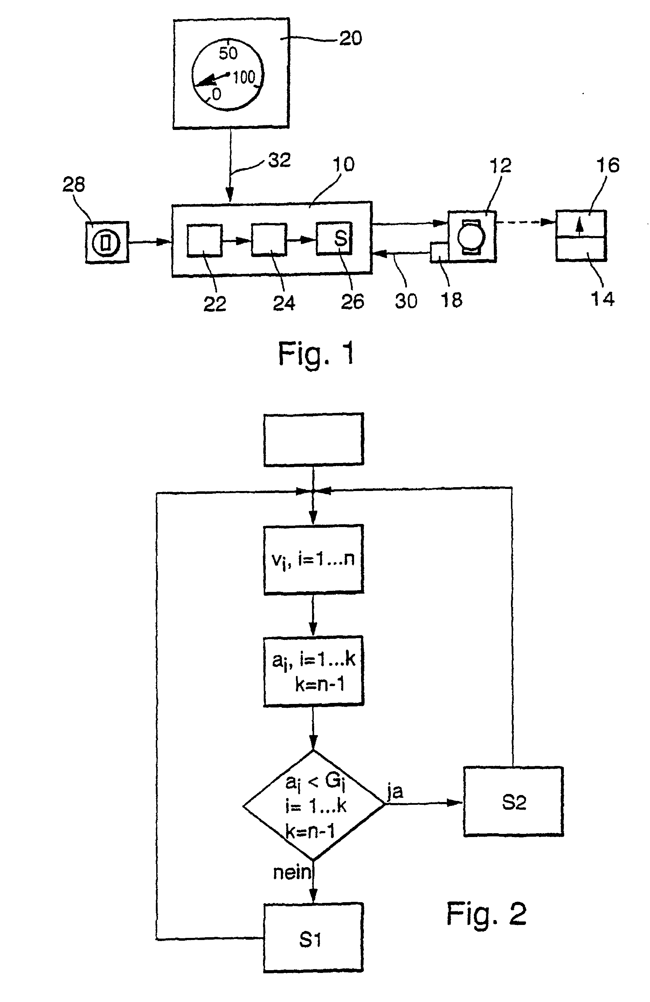

Fig. 1 zeigt in einer schematisierten Darstellung eine Vorrichtung zum Ansteuern eines Schiebehebedaches mit einer Steuerung 10, die einen elektrischen Antriebsmotor 12 zum Bewegen eines Schiebedaches 14 innerhalb eines Verstellweges ansteuert. Das Schiebedach 14 verschließt eine Schiebedachöffnung 16 oder gibt diese frei. An dem Motor 12 angeordnet ist ein Sensor 18, beispielsweise ein Hallsensor bzw. Inkrementwertgeber, der eine Kenngröße 30 in form von drehzahlabängigen Impulsen an die Steuerung 10 zur Positions- und/oder Drehzahlerfassung des Schiebedaches 14 abgibt. Diese Impulse werden in einem Vergleicher 26 zwecks Gewährleistung eines Einklemmschutzes mit einem Schwellwert S verglichen.

Der Steuerung 10 werden weitere Eingangssignale 32 eines Tachometers 20 als Mittel zur Erkennung der Fahrzeuggeschwindigkeit zugeführt, die in einem Ringspeicher 22 der Steuerung 10 zwischengespeichert und in einer Auswerteelektronik 24 der Steuerung 10 im Hinblick auf die Erkennung einer Fahrzeugbremsung ausgewertet werden.

Des weiteren wird über ein Bedienelement 28 eine Sollposition des Schiebedaches 14 vorgegeben und somit ein Öffnen oder Schließen des Daches durch den Benutzer veranlaßt. Die Erfassung der Drehzahl des Motors 12 dient üblicherweise einer Positions- oder Drehzahlregelung des Schiebedaches 14 durch die Steuerung 10 gemäß der Sollwertvorgabe durch den Benutzer.

Fig. 2 zeigt ein Ablaufdiagramm für die Erkennung der negativen Fahrzeugbeschleunigung a aus den Tachosignalen 32.

Das erfindungsgemäße Verfahren wird nun anhand der Vorrichtung nach Fig. 1 beschrieben. Im ersten Schritt wird der Start des Verfahrens veranlaßt, indem beispielsweise durch einen Zündschlüssel im Zündschloß ein Kontakt hergestellt wird, oder die Steuerung 10 mit Tachosignalen 32 beaufschlagt wird. Die Eingangssignale 32 liegen zumeist als Impulsfolge vor, denen in der Steuerung 10 eine Zeitbasis zugeordnet wird, so daß aus dieser Impulsfolge Geschwindigkeitswerte v berechnet werden können. Die sukzessiv in konstanten Zeitintervallen ermittelten Geschwindigkeitswerte vᵢ (i = 1...n) werden in dem Ringspeicher 22 zwischengespeichert. Dieser ist ausgelegt für n Stellen, so daß nach einer Startphase die n Speicherplätze des Ringspeichers 22 mit v₁ bis vₙ Geschwindigkeitswerten belegt sind. Der Ringspeicher 22 wird mit jedem darauffolgenden neuen Geschwindigkeitswert vₙ₊₁ durch die Zuordnung vₙ₊₁ -> vₙ aktualisiert.

In der darauffolgenden Stufe ermittelt die Auswerteelektronik 24 aus den Differenzen der n Geschwindigkeitswerte vᵢ₊₁ - vᵢ insgesamt
k Beschleunigungswerte aᵢ (i = 1...k und k = n - 1). Somit werden bei n = 3 Geschwindigkeitswerten v₁, v₂, v₃ im Ringspeicher 22 k = 2 Beschleunigungswerte a₁, a₂ in der Auswerteelektronik 24 gebildet. Diese weisen im Falle einer Fahrzeugbremsung einen negativen Wert auf.

Die erhaltenen Beschleunigungswerte ai werden mit den in der Steuerung 10 abgelegten Grenzwerten Gi (i = 1...k) verglichen. Sind beispielsweise alle Beschleunigungswerte ai bzw. alle bis auf einen Beschleunigungswert größer als die jeweils vorgegebenen Grenzwerte Gi so wird keine kritische Fahrzeugbremsung, insbesondere Vollbremsung, durch die Steuerung 10 erkannt, d.h. die Fahrzeugbeschleunigung befindet sich im Hinblick auf den Einklemmschutz in einem unkritischen Bereich. Somit bleiben die Parameter für den Einklemmschutz des Schiebedaches 14 unverändert. Eine eventuell vorher gesetzte Korrektur des Einklemmschutzes (Kennung für eine Schließkraftbegrenzung) wird gelöscht.

Unterschreiten alle Beschleunigungswerte ai (negativer Wert) alle vorgegebenen Grenzwerte Gi, dann erkennt die Steuerung 10 eine kritische Fahrzeugbremsung, beispielsweise eine Vollbremsung, und setzt eine Kennung für die Schließkraftbegrenzung bzw. korrigiert einen oder mehrere Parameter für den Einklemmschutz.

Beispielsweise wird im folgenden ein möglicher Einklemmschutz und die durch die Kennung hervorgerufenen Veränderungen beschrieben. Zwecks Erfassung einer Einklemmsituation wird der Sensor 18 an einem bewegten Teil des Motors 12 beispielsweise der Motorwelle oder eines Antriebsgetriebes angeordnet, so daß dieser in Abhängigkeit der Verstellbewegung des Schiebedaches 14 die Kenngröße 30 erfaßt. Die Kenngröße 30 ist beispielsweise ein Maß für die Drehzahl der Motorankerwelle. Die Kenngröße 30 wird der Steuerung 10 zugeführt und im Hinblick auf eine Einklemmsituation ausgewertet. Eine Einklemmsituation entsteht dadurch, daß beispielsweise ein Arm oder ein beliebiger anderer Gegenstand beim Schließen des Daches zwischen Dachkante und Schiebedach 14 gelangt und durch das Schiebedach 14 einer Einklemmkraft bzw. Schließkraft auf den Gegenstand ausgeübt wird. Ein Einklemmschutz gewährleistet nun unter Berücksichtigung gesetzlicher Normen und Vorschriften, daß die auf den Gegenstand ausgeübte Einklemmkraft unter einem vorgegebenen Schwellwert S1 bleibt. Als Reaktion auf eine bekannte Einklemmsituation wird üblicherweise der Motor 12 gestoppt bzw. reversiert und das Schiebedach 14 wieder geöffnet. Der eingeklemmte Gegenstand wird somit freigegeben.

Bei einem Einklemmschutz mit Drehzahlauswertung wird die Drehzahl 30 mit dem vorgegebenen Schwellwert S1 verglichen. Dabei ist die Drehzahl 30 über das Motorkennlinienfeld und somit der angelegten Motorspannung mit dem ausgeübten Drehmoment korreliert. Das Drehmoment steht dabei in einem linearen Zusammenhang mit der Verstellkraft des Daches 14 und somit auch der Einklemmkraft in einem Einklemmfall.

In einem unbeschleunigten Kraftfahrzeug entspricht der Schwellwert S1 den gesetzlich vorgegebenen Schwellwerten, beispielsweise 100 Newton Einklemmkraft.

In einem beschleunigten Kraftfahrzeug wirkt die Beschleunigung ebenfalls auf das Schiebedach 14 und somit indirekt ebenfalls auf die Drehzahl 30 der Motorankerwelle beim Schließen des Schiebedaches 14. Bei einer negativen Beschleunigung a erhöht sich die Drehzahl 30. Kommt das Fahrzeug nach der negativen Beschleunigung a zum Stillstand, dann wird die Drehzahl 30 des Motors 12 wieder geringer. Dieses wird durch die Steuerung irrtümlich als Einklemmsituation erkannt und führt zu einem Fehlreversieren des Schiebedaches 14.

Dieses Verhalten tritt ebenfalls bei einer großen positiven Beschleunigung des Kraftfahrzeugs auf, beispielsweise schnelles Anfahren des Fahrzeuges, und einer sensiblen Einstellung des Einklemmschutzes. Durch das erfindungsgemäße Verfahren kann ein unerwünschtes Reversieren hierbei ebenfalls verhindert werden.

Erkennt die Steuerung 10 nun eine negative Beschleunigung gemäß dem Verfahren nach Fig. 2, dann bewirkt das Setzen einer Kennung für die Schließkraftbegrenzung beispielsweise die Inaktivierung des Einklemmschutzes oder die Vorgabe eines weiteren korrigierten Schwellwertes S2. Der weitere Schwellwert S2 liegt nun niedriger als der unkorrigierte Schwellwert S1.

Die Grenzwerte Gi mit denen die Beschleunigungswerte ai verglichen werden, werden zwecks Optimierung des erfindungsgemäßen Verfahrens bei unterschiedlichen Schiebedächern 14 bzw. Kraftfahrzeugen experimentell im Vorfeld bestimmt. Hierbei gehen dann als Parameter u.a. die Masse des Schiebedachdeckels 14 ein. Zur sicheren Erfassung einer Fahrzeugbremsung werden vorzugsweise mindestens zwei Beschleunigungswerte und höchstens fünf Beschleunigungswerte berechnet und in der Auswerteelektronik 24 gespeichert.

Das erfindungsgemäße Verfahren kann nicht nur bei einem Schiebedach 14, sondern ebenfalls bei einem Schiebehebedach, Fensterheber, Ausstellfenster usw. verwendet werden, bei denen eine Fahrzeugbeschleunigung - positiv oder negativ - eine unerwünschte Beeinflussung auf einen Einklemmschutz ausübt.

In einem alternativen Ausführungsbeispiel wird anstelle eines Tachometers 20 ein Wegaufnehmer am Bremspedal des Kraftfahrzeugs angeordnet. Dieser erfaßt somit die Betätigung der Fahrzeugbremse bezogen auf eine Zeitbasis. Somit kann ein schnelles bzw. langsames Betätigen der Fahrzeugbremse bzw. Bremspedales unterschieden werden und eine Fahrzeugvollbremsung durch die Steuerung 10 erfaßt werden. Die Korrektur der Schließkraftbegrenzung erfolgt dann wie weiter oben bereits beschrieben.

## Patentansprüche

1. Verfahren zum Ansteuern eines Schiebedaches eines Fahrzeugs, mit einem reversierbaren Antriebsmotor (12) und einer Steuerung (10) zum Ansteuern des Motors (12), mit einem Einklemmschutz (18, 30 26) und ferner mit Mitteln (20) zur Erkennung der Fahrzeuggeschwindigkeit bzw. Fahrzeugbeschleunigung, wobei die Mittel (20) Signale (32) an die Steuerung (10) abgeben, die anhand der Signale (32) eine Fahrzeugbremsung, insbesondere eine Vollbremsung, erkennt und in Abhängigkeit davon den Einklemmschutz korrigiert,
**dadurch gekennzeichnet, daß** die der Steuerung (10) insbesondere zyklisch zugeführten Signale (32) Geschwindigkeitswerten (vᵢ) des Fahrzeugs entsprechen, von denen jeweils eine vorgebbare Anzahl (n) von Werten (vᵢ) in einem Ringspeicher (22) der Steuerung (10) zwischengespeichert werden, und daß eine Auswerteelektronik (24) der Steuerung (10) aus den Differenzen (vᵢ₊₁ - vᵢ) der jeweiligen Geschwindigkeitswerte (vᵢ) Beschleunigungswerte (aᵢ) bildet.

2. Verfahren nach Anspruch 1, **dadurch gekennzeichnet, daß** die Steuerung aus den Signalen (32) wenigstens beim Bremsvorgang einen Beschleunigungswert (aᵢ) ermittelt, diesen mit wenigstens einem Grenzwert (Gᵢ) vergleicht und daß bei Erreichen des Grenzwertes (Gᵢ) die Steuerung den Einklemmschutz korrigiert.

3. Verfahren nach Anspruch 1, **dadurch gekennzeichnet, daß** die vorgebbare Anzahl (n) größer als drei und kleiner als sechs ist.

4. Verfahren nach einem der vorhergehenden Ansprüche, wobei zumindest eine lastabhängige Kenngröße (30) durch einen Sensor (18) erfaßt und der Steuerung (10) zugeleitet wird und daß in der Steuerung (10) die Kenngröße (30) mit einem Schwellwert (S1) verglichen und in Abhängigkeit des Vergleichsergebnisses eine Einklemmsituation erkannt und ein Einklemmschutz, insbesondere ein Reversieren des Motors (12), ausgelöst wird, **dadurch gekennzeichnet, daß** bei der Fahrzeugbremsung die Steuerung (10) einen korrigierten Schwellwert (S2) für einen korrigierten Einklemmschutz einstellt.

5. Verfahren nach Anspruch 4, **dadurch gekennzeichnet, daß** die Kenngröße (30) ein Motorstrom, eine Motordrehzahl, ein Drehmoment oder Wegimpulse oder eine von diesen abgeleitete Größe ist.

6. Vorrichtung für ein Verfahren nach einem der vorhergehenden Ansprüche, **dadurch gekennzeichnet, daß** als Mittel (20) zur Erkennung der Fahrzeuggeschwindigkeit bzw. Fahrzeugbeschleunigung ein Tachometer des Kraftfahrzeugs verwendet wird.

7. Vorrichtung für ein Verfahren nach einem der vorhergehenden Ansprüche, **dadurch gekennzeichnet, daß** die Steuerung (10) einen Ringspeicher (22) für die Speicherung der Signale (32) und eine Auswerteelektronik (24) für die Berechnung einer Beschleunigung (aᵢ) aus den Signalen (32) aufweist.

## Claims

1. Method for actuating a sunroof of a motor vehicle, having a reversible drive motor (12) and a controller (10) for actuating the motor (12), having a trapping protection means (18, 30 26) and also having means (20) for detecting the speed of the vehicle or acceleration of the vehicle, the means (20) outputting signals (32) to the controller (10) which detects, by reference to the signals (32), braking of the vehicle, in particular full braking, and corrects the trapping protection as a function thereof, **characterized in that** the signals (32) which are fed to the controller (10), in particular cyclically, correspond to speed values (vᵢ) of the vehicle, in each case a predefinable number (n) of which values (vᵢ) are buffered in a ring memory (22) of the controller (10), and **in that** an electronic evaluation system (24) of the controller (10) forms acceleration values (aᵢ) from the differences (vᵢ₊₁ - vᵢ) between the respective speed values (vᵢ).

2. Method according to Claim 1, **characterized in that** the controller determines an acceleration value (aᵢ) from the signals (32), at least during the braking operation, compares the said acceleration value (aᵢ) with at least one limiting value (Gᵢ), and **in that** the controller corrects the trapping protection when the limiting value (Gᵢ) is reached.

3. Method according to Claim 1, **characterized in that** the predefinable number (n) is higher than three and lower than six.

4. Method according to one of the preceding claims, at least one load-dependent characteristic variable (30) being sensed by a sensor (18) and fed to the controller (10), and the characteristic variable (30) being compared with a threshold value (S1) in the controller (10) and a situation where trapping is occurring detected as a function of the comparison result and a trapping protection means, in particular reversal of the motor (12), triggered, **characterized in that** when the vehicle brakes the controller (10) sets a corrected threshold value (S2) for a corrected trapping protection.

5. Method according to Claim 4, **characterized in that** the characteristic variable (30) is a motor current, a motor speed, a torque or travel pulses or a variable which is derived from the latter.

6. Device for a method according to one of the preceding claims, **characterized in that** a tachometer of the motor vehicle is used as means (20) for detecting the vehicle speed or vehicle acceleration.

7. Device for a method according to one of the preceding claims, **characterized in that** the controller (10) has a ring memory (22) for storing the signals (32) and an electronic evaluation system (24) for calculating an acceleration (aᵢ) from the signals (32).

## Revendications

1. Procédé de commande d'un toit coulissant d'un véhicule automobile comprenant un moteur d'entraînement (12) réversible associé à une commande (10) de ce moteur, une protection anticoincement (18, 30, 26) ainsi que des moyens (20) de saisie de la vitesse et l'accélération du véhicule, délivrant des signaux (32) à la commande (10) qui, à partir de ces signaux (32), détecte un freinage du véhicule, en particulier un freinage à fond et en fonction de ces signaux corrige la protection anticoincement,
**caractérisé en ce que**
les signaux (32) envoyés, notamment de manière cyclique, à la commande (10) correspondent à des valeurs (vᵢ) de la vitesse du véhicule dont un certain nombre (n) sont enregistrées temporairement dans une mémoire annulaire (22) de la commande (10), et une électronique d'exploitation (24) de la commande (10) forme, à partir des différences (vᵢ₊₁- vᵢ) de la vitesse, des valeurs d'accélération aᵢ.

2. Procédé selon la revendication 1,
**caractérisé en ce qu'**
à partir des signaux (32), la commande établit au moins quand a lieu un freinage, une valeur d'accélération (aᵢ), la compare à au moins une valeur limite (Gᵢ) et si cette valeur est atteinte, la commande corrige la protection anticoincement.

3. Procédé selon la revendication 1,
**caractérisé en ce que**
le nombre prédéfini (n) peut être supérieur à trois et inférieur à six.

4. Procédé selon l'une des revendications précédentes, dans lequel au moins une grandeur caractéristique (30) dépendant de la charge est saisie par un capteur (18) et envoyée à la commande (10) dans laquelle elle est comparée à une valeur de seuil (S1) et, en fonction du résultat de cette comparaison, une situation de coincement est reconnue et une protection anticoincement est déclenchée, notamment une inversion du moteur (12),
**caractérisé en ce que**
quand le véhicule freine, la commande (10) ajuste une valeur corrigée de seuil (S2), pour obtenir une protection anticoincement corrigée.

5. Procédé selon la revendication 4,
**caractérisé en ce que**
la grandeur caractéristique (30) est une intensité, une vitesse de rotation ou un couple du moteur, ou des impulsions de déplacement ou une grandeur déduite des précédentes.

6. Dispositif pour la mise en oeuvre du procédé selon l'une des revendications précédentes,
**caractérisé en ce que**
comme moyen de reconnaissance (20) de la vitesse et de l'accélération du véhicule, il utilise un tachymètre de celui-ci.

7. Dispositif selon la revendication 6,
**caractérisé en ce que**
la commande (10) comprend une mémoire annulaire (22) pour enregistrer les signaux (32) et une électronique d'exploitation (24) pour calculer une accélération (ai) à partir des signaux (32).
